# EUROPÄISCHE PATENTANMELDUNG

(11) **EP 1 464 687 A1**
(43) Veröffentlichungstag der Anmeldung: **06.10.2004**
(21) Anmeldenummer: 04005922.2
(22) Anmeldetag: 12.03.2004
(51) Int. Cl.: C09J 7/02, C08J 7/04

(54) **Verfahren zur Herstellung von klebenden Prozess- oder Schutzfolien und deren Verwendung zum vorübergehenden Fixieren und Bedecken sowie zum Transportieren von Werkstücken**

(30) Priorität: 04.04.2003 DE 10315458
(71) Anmelder: Metafol Metall-Kunststoff GmbH & Co. KG, 42857 Remscheid (DE)
(72) Erfinder: Nittenwilm, Ralf, 56203 Höhr-Grenzhausen (DE); Sander, Dieter, 56566 Neuwied (DE)
(74) Vertreter: Flaccus, Rolf-Dieter, Dr.

(57) **Zusammenfassung**

Verfahren zur Herstellung von klebend ausgerüsteten Prozeßoder Schutzfolien für die vorübergehende und wiederablösbare Fixierung und zum Transport von Werkstücken, durch Beschichtung einer Haftkleberlösung oder -dispersion auf eine Trägerfolie in einem kontinuierlichen Verfahren und nachfolgende Trocknung, wobei die Klebkraft durch Veränderung der Dicke der Klebstoffschicht an die Eigenschaften des jeweiligen Werkstücks oder der Werkstücke angepaßt wird, sowie Verwendung solcher Prozeß- oder Schutzfolien für die vorübergehende und wiederablösbare Fixierung und zum Transport von Werkstücken.

## Beschreibung

Die vorliegende Erfindung betrifft Verfahren für die Herstellung von klebend ausgerüsteten Prozeß- oder Schutzfolien, welche für die vorübergehende und wiederablösbare Fixierung und zum Transport von Werkstücken geeignet sind. Die Erfindung betrifft ferner haftklebende Erzeugnisse, welche durch die genannten Verfahren erhalten werden können, sowie die Verwendung von klebend ausgerüsteten Prozeßoder Schutzfolien zum vorübergehenden Fixieren oder wiederablösbaren Bedecken von Werkstücken, insbesondere zur Applikation von Bauteilen bei Fertigungsprozessen.

Bei der Montage von aus vielen Bauteilen zusammengesetzten Produkten werden häufig die einzelnen Bauteile (oder Werkstücke) jeweils in entsprechend großen Stückzahlen angeliefert und müssen dann einzeln - manuell, halbautomatisch oder automatisch - appliziert und montiert werden. Hierbei ist es wünschenswert, daß die Werkstücke in einer Art und Weise hergestellt, angeliefert und zum Ort der Montage transportiert werden, daß die Entnahme eines einzelnen Werkstücks und dessen Applikation und Montage möglichst einfach und zeitsparend vonstatten geht.

Im Stand der Technik sind zahlreiche Vorrichtungen beschrieben worden, bei denen eine Vielzahl von haftklebend ausgerüsteten Gegenständen wie z. B. Etiketten, Fotoecken auf einer Folie, die meist dehäsiv ausgerüstet ist, bevorratet sind und transportiert werden können. Die haftklebenden Gegenstände, können z. B. mittels einer Spenderkante von der Trägerfolie abgelöst und weiterverarbeitet werden. Als Beispiel hierfür sei EP-A-0 609 826 genannt.

Die Verwendung von Folien, Filmen, Bändern u. dgl. zum Transport von Gegenständen bei Fertigungsverfahren ist vor allem auf dem Gebiet der Halbleiter-Chip-Herstellung weit verbreitet. So beschreibt beispielsweise EP-B-0 150 882 Folien oder Bänder, die abtrennbare Halbleiterchips vorübergehend auf einem möglicherweise leitenden Kunststoff halten. Allerdings bleibt die elektrisch leitende Klebstoffschicht an dem Chip haften, wenn dieser zur Weiterverarbeitung von der Trägerfolie abgenommen wird.

Ferner sind - beispielsweise aus DE-C-36 31 635 - Klebefolien oder Klebebänder bekannt, die selbst nach mehrmaligem Gebrauch wieder rückstandsfrei von der Unterlage abgelöst werden können. Diese Klebefolien oder Klebebänder werden durch übliche Beschichtungsverfahren wie Streichverfahren, Umkehrwalzenbeschichtung etc. hergestellt und sind deshalb für die Zwecke der vorliegenden Erfindung nicht geeignet.

In EP-A-1 262 531 ist die Verwendung eines Gravur-Druckverfahrens zum Auftragen von Klebstoff auf saugfähige Materialien oder auf Verschlußstreifen von Hygiene-Artikeln beschrieben worden. Zur Durchführung dieses Beschichtungsverfahrens werden Haftkleber mit spezifischen Eigenschaften, insbesondere Schmelzhaftkleber, benötigt, und die Druckwalze wird beheizt.

Dünne Haftklebeschichten, insbesondere solche auf der Basis von Lösemittelacrylaten und mit einer Dicke von weniger als 15 µm, lassen sich mittels der üblichen, genannten Beschichtungsverfahren nicht in der gewünschten oder geforderten Toleranz und streifenfrei herstellen. Der Grund hierfür ist, daß der Spalt zwischen Auftrags- und Dosierwelle zu schmal ist, um eine konstante Prozeßführung gewährleisten zu können, woraus Dickenschwankungen resultieren.

Zu berücksichtigen ist ferner, daß bei einer Verwendung von haftklebenden Folien als wiederablösbare Schutzfolie oder/ und zum Transport von Werkstücken hinsichtlich der Klebkraft in hohem Maße auf die Einhaltung der geforderten Toleranzen geachtet werden muß. Einerseits darf die Klebkraft in Bezug auf das jeweilige Werkstück nicht zu gering sein, da dies ein vorzeitiges und unbeabsichtigtes Ablösen und eine mangelhafte Handhabung bei der Montage zur Folge hätte. Insbesondere ist es erwünscht, daß die auf der Prozeßfolie angeordneten Werkstücke als Rollenware hergestellt werden können, wobei ein vorzeitiges Ablösen der Werkstücke verhindert werden muß.
Andererseits darf die Klebkraft aber auch nicht zu hoch sein, weil dadurch das Wiederablösen des Werkstücks bei der Montage erschwert würde und zudem eine Beschädigung des Werkstücks verursacht werden könnte. Zudem muß die Ablösung rückstandsfrei möglich sein, d. h. nach der Ablösung des Werkstücks von der Schutzfolie dürfen keine Klebstoffreste an dem Werkstück haften bleiben.

Da die Material-Oberflächen der verschiedenen Werkstücke sehr unterschiedliche Eigenschaften hinsichtlich ihrer Klebfähigkeit haben können (z. B. niederenergetische oder hochenergetische Oberflächen), muß die Klebkraft einer Schutzfolie an die Art der jeweiligen Werkstücke spezifisch angepaßt werden, damit die vorstehend genannten Bedingungen eingehalten werden.

Zwar wäre es möglich, für jeden einzelnen Anwendungsfall, d. h. für jede Art von Werkstück, eine spezielle KlebstoffZusammensetzung herzustellen, um auf diese Weise die Klebkraft wie vorstehend beschrieben an die Material-Eigenschaften des jeweiligen Werkstücks anzupassen. Die Herstellung von individuellen Klebstoff-Rezepturen für jeden einzelnen Anwendungsfall wäre jedoch sehr aufwendig.

Der vorliegenden Erfindung lagen deshalb folgende Ziele zugrunde:
- Bereitstellung von wiederablösbaren Prozeß- oder Schutzfolien, die zur Fixierung oder/und zum Transport von Werkstücken geeignet sind;
- Bereitstellung einer Prozeß- oder Schutzfolie, die ein möglichst rückstandsfreies Wiederablösen von Werkstücken ermöglicht;
- individuelle Anpassung der Klebkraft der Prozeß- oder Schutzfolie an die Materialeigenschaften der jeweiligen Werkstücke;
- Erzeugung einer möglichst homogenen Klebschicht, insbesondere mit einer Dicke von 15 µm oder darunter;
- möglichst unter Verwendung von Standard-Haftklebstoffen;
- Einhaltung enger Fertigungstoleranzen bei der Herstellung kundenspezifischer Produkte;
- Bereitstellung von Verfahren, welche eine einfache, kostengünstige und zeitsparende Herstellung derartiger Folien ermöglichen
- Bereitstellung von wiederablösbaren Prozeß- oder Schutzfolien, die eine einfache und sichere Handhabung bei der Herstellung, der Lagerung, dem Transport und der Montage von Werkstücken ermöglichen.

Diese Ziele und weitere Vorteile werden überraschenderweise durch Verfahren gemäß Hauptanspruch, durch die erfindungsgemäß herstellbaren haftklebenden Folien, sowie durch die Verwendung der erfindungsgemäßen Folien bei der Fertigung verschiedenartigster Produkte verwirklicht. Weitere vorteilhafte Ausführungsformen sind in den abhängigen Patentansprüchen beschrieben.

Gemäß Hauptanspruch erfolgt die Herstellung der erfindungsgemäßen Prozeß- oder Schutzfolien in der Weise, daß eine Haftkleberlösung oder -dispersion in einem kontinuierlichen Verfahren auf eine Trägerfolie beschichtet und nachfolgend getrocknet wird, wobei die Klebkraft der Folie dadurch an die Eigenschaften des jeweiligen Werkstücks oder der Werkstücke angepaßt wird, daß die Dicke der Klebstoffschicht verändert wird. Auf diese Weise werden die Kleb-Eigenschaften nicht über die Zusammensetzung des Haftklebstoffes, d. h. über die Haftklebstoff-Rezeptur, gesteuert. Vielmehr können Standard-Haftklebstoffe verwendet werden, wodurch die Herstellung einfacher und kostengünstiger wird. Außerdem lassen sich dadurch Klebkraft-Schwankungen besser vermeiden, als wenn unterschiedliche Klebkraft-Rezepturen hergestellt werden müssen.

Als Trägerfolie eignet sich grundsätzlich jedes dem Fachmann bekannte Material, das mit Klebstoff beschichtbar ist und die geforderten mechanischen und chemischen Eigenschaften aufweist. Bevorzugt werden Trägerfolien verwendet, die aus der Gruppe der Polyesterfolien (wie PETP) und Polyolefinfolien ausgewählt sind. Ihre Dicke liegt vorzugsweise im Bereich von 10 bis 75 µm, insbesondere im Bereich von 12 bis 50 µm.

Ferner ist es vorteilhaft, die für die Klebstoffbeschichtung vorgesehene Seite der Trägerfolie einer Oberflächenvorbehandlung (z. B. Coronabehandlung oder/und Oxifluorierung) zu unterziehen, oder eine so vorbehandelte Trägerfolie zu verwenden. Durch diese Maßnahme kann die Haftung des Klebstoffs auf der Oberfläche der Trägerfolie verbessert werden.

Um die Haftung des Klebstoffs auf der Trägerfolie zu verbessern, und um ein möglichst rückstandsfreies Wiederablösen der Klebefolie von dem Werkstück zu ermöglichen, ist nach einer bevorzugten Ausführungsform vorgesehen, daß auf der für die Klebstoffbeschichtung bestimmte Seite der Trägerfolie vor der Klebstoffbeschichtung ein Haftvermittler oder eine Mischung von Haftvermittlern aufgetragen wird, oder daß eine derart vorbehandelte Folie verwendet wird. Geeignete Haftvermittler, auch "Primer" genannt, sind dem Fachmann bekannt und kommerziell erhältlich. Haftvermittler sind Stoffe, die der Verbesserung der Haftfestigkeit miteinander zu kombinierender Werkstoffe dienen können.
Als Haftvermittler für Klebstoffe kommen beispielsweise in Betracht: Ethylen-Acrylamid-Comonomere, polymere Isocyanate, reaktive Silicium-organische Verbindungen.

Des weiteren wird bevorzugt, daß die nichtklebende Seite der Trägerfolie dehäsiv ausgerüstet ist. Hierfür geeignete Maßnahmen, z. B. Silikonisierung, sind dem Fachmann bekannt.

Für das erfindungsgemäße Herstellungsverfahren können eine Vielzahl von bekannten Klebstoffen verwendet werden, insbesondere solche aus der Gruppe, die Polyacrylatlösungen und - dispersionen, Kautschuklösungen und -dispersionen, Silikonlösungen und -dispersionen sowie Kombinationen der vorgenannten Klebstoffe umfaßt. Neben Reinacrylat-Haftklebern werden modifizierte Polyacrylatlösungen und -dispersionen besonders bevorzugt. Unter "Reinacrylaten" werden Polyacrylate ohne Harzzusatz verstanden. Geeignete Polyacrylat-Haftkleber und Lösungen bzw. Dispersionen davon sind dem Fachmann bekannt und kommerziell erhältlich. Im allgemeinen handelt es sich dabei um Acrylathaftkleber, die in organischen Lösungsmitteln gelöst oder dispergiert sind. Jedoch können auch wasserbasierende Acrlyathaftkleber zum Einsatz kommen.

Im Einzelfall kann es vorteilhaft sein, wenn der zur Beschichtung verwendete Klebstoff einen oder mehrere modifizierende Zusätze enthält. Als modifizierende Zusätze kommen insbesondere Stoffe aus Gruppe, die vernetzende Reagenzien, Klebharze (z. B. Terpenphenolharz), hydrophile Kieselsäure, Ruß, Füllstoffe (z. B. keramische Füllstoffe) und Pigmente umfaßt, in Betracht. Als Vernetzungsreagenzien kommen insbesondere Metall-Acetylacetonate in Betracht, wie Aluminiumacetylacetonat und Titanylacetylacetonat. Gemäß einer weiteren bevorzugten Ausführungsform der Erfindung werden Reinacrylat-Haftkleber eingesetzt, welche durch einen oder mehrere der genannten Zusätze modifiziert wurden.
Die Verwendung einer speziellen Kleber-Rezeptur oder die Beimischung von modifizierenden Zusätzen kommt als zusätzliche, optionale Maßnahme in Betracht, um die Klebkraft an die besonderen Materialeigenschaften der jeweiligen Werkstücke anzupassen.

Für die Durchführung der erfindungsgemäßen Herstellungsverfahren eignen sich insbesondere Klebstofflösungen oder -dispersionen, die bei 20 °C eine dynamische Viskosität im Bereich von 0,05 bis 5 Pa s, vorzugsweise im Bereich von 0,1 bis 1,5 Pa s, aufweisen. Abhängig vom jeweils verwendeten Klebersystem (d. h. der Kleber-Rezeptur) müssen die Haftkleberlösungen bzw. -dispersionen verdünnt und auf eine entsprechend niedrige Viskosität, wie angegeben, eingestellt werden. Auf diese Weise kann ein "Fadenziehen" des Haftklebers während des Beschichtens und eine Erwärmung, verursacht durch Reiben der Polymere, vermieden werden.

Nach einer besonders bevorzugten Ausführungsform werden bei den erfindungsgemäßen Herstellungsverfahren Gravurwalzen, insbesondere Rasterwalzen, als Auftragswerkzeuge verwendet.

Auf diese Weise lassen sich sehr glatte, homogene und relativ strukturfreie, streifenfreie Haftklebeschichten mit einem Flächengewicht von 15 g/m² oder weniger herstellen, und mit einer Schichtdicke von 15 µm oder weniger (im getrockneten Zustand). Insbesondere kann der Klebstoffauftrag mit einem Flächengewicht von höchstens 10 g/m², besonders bevorzugt mit einem Flächengewicht von 3 bis 10 g/m², vorgenommen werden.

Zudem ermöglicht der Klebstoffauftrag mittels Gravur- oder Rasterwalze eine sehr genaue Einhaltung der für die Erzielung eines bestimmten Klebkraftwertes erforderlichen Schichtdicke.

Die Klebstoffbeschichtung mittels Gravur- oder Rasterwalze beruht auf den aus dem Bereich der graphischen Industrie bekannten Tiefdruckverfahren.
Die Gravurwalze oder Rasterwalze weist vorzugsweise eine Vielzahl von rasterartigen Vertiefungen oder Aussparungen auf, die eine vorgegebene geometrische Form und Anordnung und eine vorgegebene Tiefe haben. Durch die Auswahl einer bestimmten Gravur- oder Rasterwalze, welche rasterartige Vertiefungen oder Aussparungen mit einer bestimmten Geometrie, Form, Anordnung und Tiefe aufweisen, kann die Dicke der getrockneten Klebstoffschicht und damit deren Klebkraft verändert und gesteuert werden, und so an die Eigenschaften eines gegebenen Werkstücks angepaßt werden.
Beispielsweise können nach besonderen Ausführungsformen der Erfindung Gravur- oder Rasterwalzen mit Geometrien wie z. B. Haschuren, Kreuzhaschuren (Linien), Pyramidenstumpfraster, Hexagonal (Raster) eingesetzt werden. Die verwendeten Gravur- oder Rasterwalzen sind vorzugsweise verchromt oder/ und mit Keramik beschichtet, um Klebstoff-Verschmutzungen oder -Einlagerungen zu verhindern.

Bevorzugt werden Gravur- oder Rasterwalzen verwendet, die ein Schöpfvolumen im Bereich von 10 bis 500 ml/m², vorzugsweise von 50 bis 200 ml/m², aufweisen. Durch das Schöpfvolumen wird das Flächengewicht und die Schichtdicke maßgeblich beeinflußt.

Vorzugsweise ist der Gravur- oder Rasterwalze eine Gegenwalze oder -Rolle zugeordnet, derart, daß die Trägerfolie während des Beschichtungsvorganges zwischen Gravur- oder Rasterwalze einerseits und Gegenwalze andererseits hindurchgezogen und vorwärtstransportiert wird. Diese Gegenwalze oder -rolle ist vorzugsweise mit einer Gummibeschichtung oder einem Gummi-Belag versehen, und kann durch geeignete, dem Fachmann bekannte Mittel an die Gravur- oder Rasterwalze angepreßt werden.

Da vorzugsweise strukturviskose Haftklebelösungen zum Einsatz kommen, ist die Prozeßführung von besonderer Bedeutung. Es hat sich als besonders günstig erwiesen, wenn Gravur- oder Rasterwalze einerseits und Gegenwalze andererseits mit unterschiedlichen Bahngeschwindigkeiten arbeiten, so daß Friktion erzeugt wird. Auf diese Weise lassen sich besonders gleichmäßige und glatte Haftkleberschichten erhalten, insbesondere im Zusammenwirken mit einer darauf angepaßten Anlagengeschwindigkeit. Die Anlagengeschwindigkeit liegt bevorzugt im Bereich von 3 bis 100 m/min, je nach Art der Anlage und Länge des Trockners.

Zum Befüllen der Vertiefungen der Gravur- oder Rasterwelle wird besonders vorteilhaft ein Einkammer- oder Zweikammerabstreifsystem (Rakelsystem) verwendet, das vorzugsweise geschlossen ist. Dadurch läßt sich eine hohe Genauigkeit der Befüllung erreichen. Des weiteren ist auch ein Druckkammer-Rakelsystem geeignet.

Anstatt des vorstehend beschriebenen Gravur- oder Rasterdruckverfahrens können auch vergleichbare drucktechnische Verfahren, insbesondere Hochdruckverfahren wie Flexodruckverfahren, eingesetzt werden. Im letztgenannten Fall wird die Klebstofflösung oder -dispersion von der Rasterwalze auf ein Klischee der Übertragungswalze übertragen, und von dort auf die Trägerfolie.

Die aufgetragene Klebstoffschicht wird nachfolgend unter Verwendung bekannter Trocknungsvorrichtungen unter Vermeidung von Blasenbildung getrocknet. Die Trocknung erfolgt deshalb vorteilhaft in einem Trockenkanal mit zwei oder mehreren aufeinanderfolgenden Temperaturzonen mit einem aufsteigenden und absteigenden Temperaturprofil, vorzugsweise bei Temperaturen im Bereich von 30 bis 180 °C, insbesondere im Bereich von 40 bis 140 °C.

Die vorliegende Erfindung erstreckt sich ferner auf haftklebende Erzeugnisse, insbesondere Prozeß- oder Schutzfolien, die durch eines der vorstehend beschriebenen, erfindungsgemäßen Herstellungsverfahren erhalten werden können. Die haftklebenden Erzeugnisse können in vorteilhafter Weise als Band, Rolle oder als Folienabschnitte in den verschiedenartigsten geometrischen Formen hergestellt werden, so daß eine Anpassung an unterschiedliche geometrische Formen der Werkstücke möglich ist.
Die haftklebenden Schichten weisen im getrockneten Zustand vorzugsweise eine Dicke im Bereich von 1 bis 20 µm, besonders bevorzugt im Bereich von 5 bis 15 µm auf.

Die erfindungsgemäßen Erzeugnisse eignen sich zur Verwendung als Schutz- oder Prozeßfolie für die verschiedenartigsten Werkstücke, wobei die Klebkraft dieser Folien, wie vorstehend beschrieben, an die spezifischen Eigenschaften der unterschiedlichen Arten von Werkstücken angepaßt sind. Dadurch ist es möglich, in einer Art "Baukasten-System" kunden-spezifische Produkte, jeweils aus Werkstücken und Schutz- oder Prozeßfolie bestehend, mit engen Fertigungstoleranzen (insbesondere hinsichtlich der geforderten Klebkraft) herzustellen. Demgemäß erstreckt sich die Erfindung auch auf haftklebende Erzeugnisse der genannten Art, auf welchen ein Werkstück oder eine Vielzahl von Werkstücken wiederablösbar aufgeklebt ist.

Durch den Einsatz von einseitig dehäsiv ausgerüsteten (z. B. silikonisierten) und einseitig geprimerten oder speziellen polyolefinischen Folien werden darüber hinaus geringere Zugspannungen bei der Verwendung der Folien zum Transport von Werkstücken ermöglicht. Dies bedeutet, daß die Folien aufgrund ihrer spezifischen Eigenschaften auch bei geringeren Zugspannungen eine glatte Oberfläche aufweisen und dadurch als gleichmäßig ebene Unterlage für die zu transportierenden Werkstücke dienen können. Jedoch tritt selbst in den Fällen, wo höhere Zugspannungen notwendig sind und verwendet werden, keine Dehnung der Folie auf, so daß eventuelle Formverzerrungen der zu transportierenden Werkstücke vermieden werden.

Die Klebkraft der haftklebenden Erzeugnisse liegt vorzugsweise im Bereich von 0,1 bis 10 N/25 mm, besonders bevorzugt im Bereich von 0,5 bis 5 N/25 mm. "Klebkraft" bedeutet dabei den dynamischen Schälwiderstand nach DIN 1939, gemessen auf poliertem Stahl.
Die Haftfestigkeit der klebenden Erzeugnisse auf den jeweiligen Werkstücken liegt vorzugsweise im Bereich von 0,05 bis 5 N/25 mm, besonders bevorzugt im Bereich von 0,1 bis 2 N/25 mm (gemessen nach DIN EN 1939). Da die Klebkraft in hohem Maße von der Oberflächenbeschaffenheit des jeweiligen Werkstücks abhängt, weichen diese Werte von den unter Standardbedingungen (DIN 1939, auf poliertem Stahl) gemessenen Werten ab.

Die Erfindung erstreckt sich des weiteren auf die Verwendung einer vorstehend beschriebenen Prozeß- oder Schutzfolie zum vorübergehenden Fixieren oder Bedecken von Werkstücken, sowie zum anschließenden oder späteren Transport von Werkstücken, wobei das Werkstück schließlich wieder von dem Folie abgelöst wird. Die Folie kann zum Schutz eines Werkstücks oder Produkts während der Fertigung oder Lagerung verwendet werden. Als Prozeßfolie kann sie verwendet werden, um Werkstücke an den Ort der Montage zu transportieren und die Applikation des Werkstücks bei der Montage zu erleichtern.
Dabei ist es besonders vorteilhaft, wenn eine Vielzahl von identischen oder gleichartigen Werkstücken wiederablösbar auf einer solchen genannten Folie angeordnet sind.
Als Werkstücke kommen Gegenstände oder Bauteile unterschiedlichster Art in Betracht; vorzugsweise handelt es sich um dünne oder/und flexible Flächengebilde, insbesondere solche aus Vlies, textilen Stoffen, Geweben, Schaumstoff oder Kunststoff-Folien, Metallbleche oder Folien, Flächengebilde aus anderen Materialien wie z. B. Holz, oder Kombinationen der vorgenannten Gegenstände. Die Werkstücke oder Bauteile sind selbst nicht klebend ausgerüstet, zumindest nicht auf derjenigen Oberfläche, die mit der Prozeß- oder Schutzfolie beklebt wird.

Die erfindungsgemäßen Prozeß- oder Schutzfolien mit darauf angeordneten Werkstücken eignen sich vorteilhaft zur Verwendung bei der manuellen, halbautomatischen oder automatischen Applikation von Werkstücken bei Fertigungsprozessen.

Nachfolgend wird die Erfindung anhand von Ausführungsbeispielen und Zeichnungen näher erläutert.

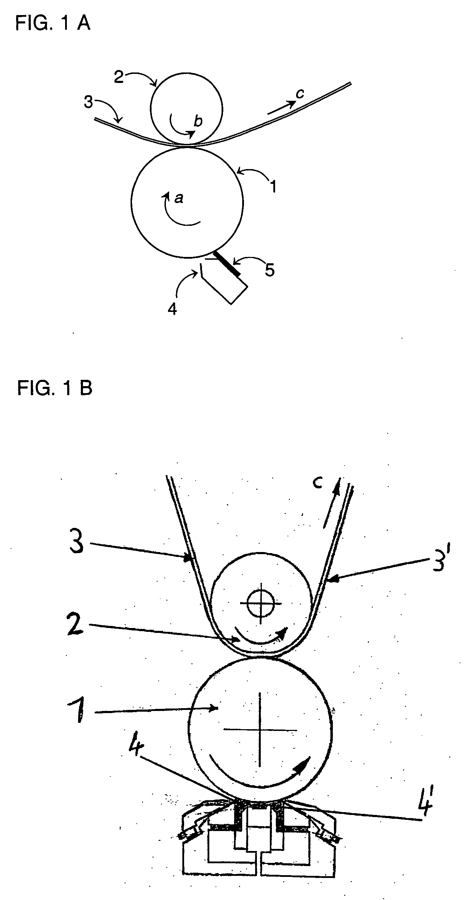

Fig. 1A und 1B zeigen in schematischer Schnitt-Darstellung das Prinzip des Klebstoffauftrags mittels Gravur- oder Rasterwalze.
Die Beschichtungsvorrichtung nach Fig. 1A umfaßt eine Gravur- oder Rasterwalze 1, eine Gegenwalze 2 (gummiert) und ein mit Klebstoff befüllbares Einkammer-Abstreifsystem 4 (mit Rakel 5) für die Befüllung der Gravurwalze. Die Vertiefungen der Gravurwalze sind nicht dargestellt. Die Trägerfolie 3 befindet sich zwischen der Gravurwalze 1 und der Gegenrolle 2 und wird bei Rotation der Walzen in Richtung der Pfeile a,b in Richtung des Pfeils c vorwärts transportiert. Beim Durchlauf zwischen beiden genannten Walzen wird der Klebstoff von der Gravurwalze auf die Trägerfolie übertragen. Anschließend gelangt die mit Klebstoff beschichtete Trägerfolie in die Trockenvorrichtung (nicht abgebildet).

Fig. 1B zeigt eine Abwandlung der in Fig. 1A gezeigten Vorrichtung bzw. des dort gezeigten Verfahrens, wobei der Klebstoffauftrag mittels eines Zweikammer-Systems erfolgt; die Bezugszeichen 4 und 4' bezeichnen die beiden Kammern. Die mit Klebstoff beschichtete Folie ist mit 3' bezeichnet. Im übrigen haben die Bezugszeichen dieselbe Bedeutung wie in Fig. 1A.

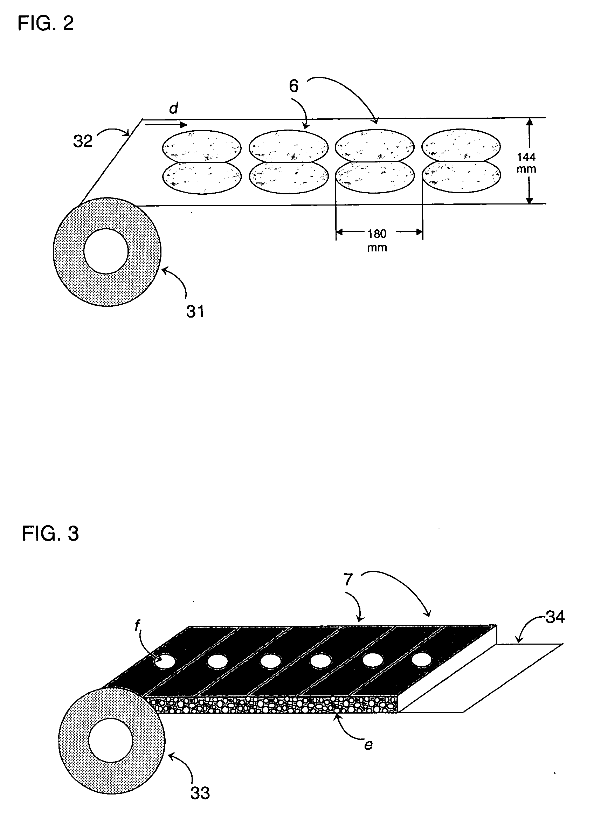

### Beispiel 1 und Fig. 2

Dieses Beispiel beschreibt einen Anwendungsfall betreffend die Herstellung von Lautsprechern. Fig. 2 zeigt in perspektivischer Darstellung eine Prozeßfolie 32 mit darauf angeordneten Werkstücken 6.
Ein Lautsprecher wird mit einem ovalen, kopfseitig abgeflachten Vliesstoff 6 vor Staub, Feuchtigkeit und magnetisierbaren Partikeln geschützt. Die akustischen Eigenschaften sollen nicht verändert werden. Das Vliesstoff-Material soll auf einer Rolle präsentiert und halbautomatisch appliziert werden können; Stapelware ist nicht gewünscht.

### Verwendetes Vliesstoff-Material:

100% weiße, akustiktaugliche Zellwolle/Viskose (Typ: Paraprint OL 50; Fa. Lohmann Vliesstoffe GmbH & Co. KG, Dierdorf).

| | |
|---|---|
| Dicke | 0,42 mm |
| Gewicht | 50 g/m² |
| Luftdurchlässigkeit | 3000 1/m²s nach DIN 53887 |

Die Abmessungen der ovalen Vliesstoffstücke 6 sind wie folgt: Länge 160,5 mm; Breite 74 mm.

An die Prozeßfolie 32 werden folgende Anforderungen gestellt:
- Leichtes, rückstandsfreies Entfernen des Vliesprodukts.
- Kein Ausbluten, kein Anstieg der Klebkraft bei Lagerung
- Definierte Haftung, Vermeidung abfallender Teile.
- ermöglicht faltenfreies Applizieren.

### Herstellung der Prozeßfolie 32:

Aufgrund der rauhen Oberfläche des Vliesteils wird ein Reinacrylat-Polymer mit höherem Klebstoffauftrag eingesetzt.

### Rezeptur Reinacrylat:

Polyacrylat gelöst in Ethylacetat (16% Feststoffanteil)

| | |
|---|---|
| 65% | 2-Ethylhexylacrylat |
| 5% | Acrylsäure |
| 29% | Methylacrylat |
| 1,0 % | Acetylacetontitanchelat gelöst in 2-Propanol |
| (Angaben in Gew.-%). | |

### Beschichtungsverfahren:

Die Beschichtung erfolgt in einer Beschichtungsanlage mit Trockner für Lösemittelhaftklebstoffe. Das Auftragssystem bildet eine Haschuren-Gravurwalze mit Schöpfvolumen von 120 ml mit Einkammerabstreifsystem, die gewählte Gravurwalze und die Klebstoffrezeptur ergeben einen Klebstoffauftrag von 9 ± 1 g/m².
Die Übertragung der Haftklebelösung erfolgt über eine gummierte Welle auf eine corona-vorbehandelte, transparente PETP-Folie von 36 µm Dicke. Die Gegenwelle arbeitet mit leichter Friktion. Die Trocknung erfolgt im Trockenkanal mit Temperaturgefälle zur Vermeidung von Blasen.

Das Ergebnis ist ein gleichmäßiges, ebenes Beschichtungsbild mit konstanten Klebkraftwerten: 1,8 - 2,8 N/25mm auf poliertem Stahl in Anlehnung an DIN EN 1939.

Eine ca. 145 mm breite Rolle Vlies (Zellwolle/Viskose Paraprint OL 50) wird auf eine 144 mm breite, einseitig schwachhaftende, transparente Polyesterfolie (hergestellt wie vorstehend beschrieben) kaschiert. Diese Halbfertigware wird in einer kontinuierlichen Stanzmaschine mit Rotations-Werkzeug weiterverarbeitet. Dabei wird das Vlies ovalförmig (siehe oben) durchgestanzt, die untenliegende Prozeßfolie angestanzt und das überflüssige Material entgittert. Die Präsentation der Teile 6 erfolgt gemäß Fig. 2 zweireihig, gespiegelt aufgelegt.

Der Kunde bezieht die Ware auf einer Rolle 31 und zieht die Vliesteile 6 manuell von der schwachhaftenden Folie 32 ab und legt das Produkt 6 in die vorgesehene Form des Lautsprechers ein.
Die Vliesteile 6 lassen sich problemlos halbautomatisch verarbeiten, wobei weder auf der Prozeßfolie 32 noch auf dem Vlies 6 Rückstände festzustellen sind. Die Teile sitzen fest auf der Rolle 31; die Haftfestigkeit des Vlieses 6 zur Prozeßfolie 32 beträgt 0,3 - 0,6 N/25mm.

### Beispiel 2 und Fig. 3

Diese Beispiel beschreibt einen Anwendungsfall betreffend die Herstellung von Waschmaschinen, insbesondere des Bedienungsfeldes (Display-Bereich). Fig. 3 zeigt in perspektivischer Darstellung eine Prozeßfolie 34 mit darauf angeordneten Werkstücken 7.

Im Blendenbereich einer Waschmaschine wird ein elektrischer Schalter mit einem Polyethylenschaumstoff-Formteil 7 gegen Wasser, Waschmittel und Schmutz abgedichtet. Die Metallwelle des Drehschalters wird von der kreisrunden Öffnung f (ca. 30 mm Durchmesser) der Dichtung umschlossen. Abmessungen des Formteils 7: Länge 180 mm, Breite 80 mm, Dicke 2,0 mm.

Material: XLPE-Schaum anthrazit Alveolit TE2002 (Fa. Sekisui Alveo B.V., Roermond, NL).
Der PE-Schaum ist niederenergetischer Natur, daher wird ein modifizierter (durch Zusatz von Terpenphenolharz) Acrylatklebstoff auf Lösemittebasis eingesetzt, um eine bessere Affinität zur PE-Oberfläche zu bekommen.

### Rezeptur der modifizierten Acrylatlösung:

Polyacrylatlösung in Ethylacetat (20% Feststoffanteil)

| | |
|---|---|
| 39% | 2-Ethylhexylacrylat |
| 39% | N-Butylacrylat |
| 4,5% | Acrylsäure |
| 0,5 % | Aluminium-Acetylacetonat, gelöst in 2-Propanol |
| 15% | Terpenphenolharz Dertophene T110 (Fa. DRT). |
| (Angaben in Gew.-%) | |

### Beschichtungsverfahren:

Die Beschichtung erfolgt mittels einer Beschichtungsanlage mit Trockner für Lösemittelhaftklebstoffe. Das Auftragssystem bildet eine Kreuz-Haschuren-Gravurwalze mit Keramikbeschichtung mit einem Schöpfvolumen von 70 ml und einem Zweikammerabstreifsystem. Die gewählte Gravurwalze und Klebstoffrezeptur ergeben einen Klebstoffauftrag von 6 ± 1 g/m².
Die Übertragung der Haftklebelösung geschieht über eine gummierte Welle auf eine geprimerte, weiße 50 µm dicke PETP-Folie. Die Gegenwelle arbeitet mit leichter Friktion. Die Trocknung erfolgt im Trockenkanal mit Temperaturgefälle zur Vermeidung von Blasen.

Ergebnis ist ein gleichmäßiges, ebenes Beschichtungsbild mit konstanten Klebkraftwerten: 3,5 - 4,5 N/25mm auf poliertem Stahl in Anlehnung an DIN EN 1939.

Der Schaumstoff Alveolit TE2002 wird mit einer geeigneten Prozeßfolie 34, deren Herstellung im vorangehenden Absatz beschrieben wurde, kaschiert. Das Vorprodukt wird zur Erzeugung der Öffnungen f mittig durchstanzt, auf 180 mm Breite randbeschnitten und Schnitt an Schnitt (bis zur Prozeßfolie) angestanzt (Fig. 3). Die Präsentation ist ebenfalls aus Fig. 3 ersichtlich. Die Teile 7 werden über eine Kante gespendet. Das rechteckige, 2,0 mm dicke Schaumteil 7 wird rückseitig in eine Außenblende des Display-Bereichs eingelegt und mit dem Innenteil des Eingabedisplays verpresst. Daher ist eine selbstklebende Ausrüstung der Dichtung nicht erforderlich.

Die Schaumstoffteile 7 lassen sich problemlos über die Kante spenden und verrutschen nicht innerhalb der Rolle 33. Der Schaum reißt nicht aus und auf seiner Oberfläche sind keinerlei Klebstoffrückrückstände festzustellen. Die Teile 7 sitzen fest auf der Rolle 33; die Haftfestigkeit des Schaumteils 7 zur Prozeßfolie 33 beträgt 0,6 - 1,0 N/25mm. Nach dem Einbau wird der Schaum auf ca. 1,6 mm komprimiert und trägt sich dadurch alleine.

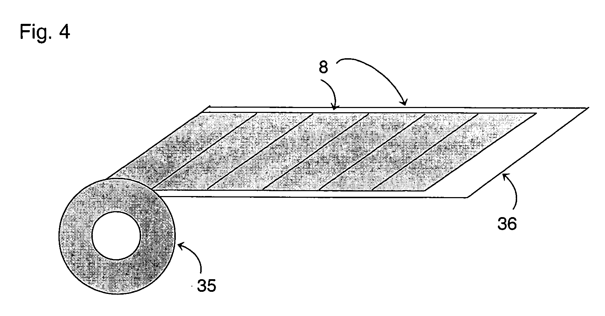

### Beispiel 3 und Fig. 4

Diese Beispiel beschreibt einen Anwendungsfall betreffend die Herstellung von Autoradios, insbesondere des LCD-Displays eines Autoradios. Fig. 4 zeigt in perspektivischer Darstellung eine Prozeßfolie 36 mit darauf angeordneten Werkstücken 8.

Im Blendenbereich eines Autoradios soll ein STN-LCD mit Hilfe eines Farbfilters 8 blau ausgeleuchtet werden. Dazu verwendet man eine 80 µm dicke blau-transparente Polyesterfolie, die im Gehäuse vor das LCD positioniert wird. Es dürfen keinerlei Klebstoffrückstände auf der Filterfolie 8 bleiben, um optische Streuung von Licht zu vermeiden.

Material: LEE Folie 180 PETP blau, Dicke 80 µm (Länge 100 mm, Breite 27 mm); Temperaturbereich: -40°C bis +100°C

Der genannte Polyester ist ein hochenergetischer Kunststoff (ca. 36 mN/m), daher wird ein hoch vernetzter Reinacrylatklebstoff auf Lösemittebasis eingesetzt, um eine möglichst konstant niedrige Haftung ohne Klebstoffrückstände zu erhalten.

### Rezeptur der modifizierten Acrylatlösung:

Polyacrylatlösung in Ethylacetat und n-Hexan (13% Feststoffanteil)

| | |
|---|---|
| 39% | 2-Ethylhexylacrylat |
| 50% | N-Butylacrylat |
| 10% | Acrylsäure |
| 0,5% Vernetzer 1: | Aluminium-Acetylacetonat gelöst in 2-Propanol |
| 0,5% Vernetzer 2 : | Melamin-Formaldehydharz Cymel 327 (Fa. Cytec) |
| (Angaben jeweils in Gew.-%) | |

### Beschichtungsverfahren:

Die Beschichtung der Folie erfolgt mittels einer Beschichtungsanlage mit Trockner für Lösemittelhaftklebstoffe. Das Auftragssystem bildet eine Gravurwalze mit Pyramidenstumpfraster mit einem Schöpfvolumen von 50 ml und einem Zweikammerabstreifsystem. Die gewählte Gravurwalze und Klebstoffrezeptur ergeben einen Klebstoffauftrag von 5 ± 1 g/m².
Die Übertragung der Haftklebelösung geschieht über eine gummierte Welle auf eine geprimerte, weiße 50 µm dicke PETP-Folie. Die Gegenwelle arbeitet mit leichter Friktion. Die Trocknung erfolgt im Trockenkanal mit Temperaturgefälle zur Vermeidung von Blasen.
Ergebnis ist ein gleichmäßiges, ebenes Beschichtungsbild mit konstanten Klebkraftwerten: 0,5-0,8 N/25mm auf poliertem Stahl in Anlehnung an DIN EN 1939.

Die blaue PETP-Folie wird mit einer geeigneten Prozeßfolie, deren Herstellung vorstehend beschrieben wurde, kaschiert (10 mm überstehend). Das Vorprodukt wird Schnitt an Schnitt (bis zur Prozeßfolie 36) angestanzt (Fig. 4). Die Präsentation ist ebenfalls aus Fig. 4 ersichtlich. Die Teile 8 werden automatisch über eine zurückfahrende Kante und einen Vakuumkopf in das Spritzgussteil eingelegt; Das Teil 8 wird vor der Applikation per Visionskamera nochmals genau angepasst.
Die Nachteile des herkömmlichen Verfahrens des Stapelns mit Vlieszwischenabdeckung, nämlich manuelle Applikation, längere Einbauzeit, zusätzliche Verpackung, können somit vermieden werden.
Anschließend erfolgt manuell das Einlegen des STN-LCD Displays und der Einbau an das eigentliche Radiogerät.

Die PETP-Stanzteile lassen sich problemlos über die Kante spenden und verrutschen nicht innerhalb der Rolle 35. Die optischen Eigenschaften der Filterfolie 8 sind auch nach 2-wöchiger Lagerung einwandfrei, da die Oberfläche keinerlei Klebstoffrückstände aufweist. Die Teile 8 sitzen fest auf der Rolle 35; die Haftfestigkeit des Filterfolienteils 8 zur Prozeßfolie 36 beträgt 0,8 - 1,4 N/25mm.
Zusätzlich werden eventuelle Staubpartikel durch die Prozeßfolie bei der Applikation entfernt.

## Patentansprüche

1. Verfahren zur Herstellung von klebend ausgerüsteten Prozeß- oder Schutzfolien, welche für die vorübergehende und wiederablösbare Fixierung und zum Transport von Werkstücken geeignet sind, durch Beschichtung einer Haftkleberlösung oder -dispersion auf eine Trägerfolie in einem kontinuierlichen Verfahren und nachfolgende Trocknung, **dadurch gekennzeichnet, daß** die Klebkraft an die Eigenschaften des jeweiligen Werkstücks oder der Werkstücke angepaßt wird, wobei die Einstellung der gewünschten spezifischen Klebkraft durch Veränderung der Dicke der Klebstoffschicht erfolgt.

2. Verfahren nach Anspruch 1, **dadurch gekennzeichnet, daß** eine Trägerfolie verwendet wird, die aus der Gruppe der Polyesterfolien und Polyolefinfolien ausgewählt ist, vorzugsweise mit einer Dicke von 10 bis 75 µm, insbesondere 12 bis 50 µm.

3. Verfahren nach Anspruch 1 oder 2, **dadurch gekennzeichnet, daß** die Trägerfolie auf der für die Klebstoffbeschichtung bestimmten Seite vor der Klebstoffbeschichtung einer Oberflächen-Vorbehandlung, insbesondere durch Corona-Behandlung oder/und Oxifluorierung, unterzogen wird, oder daß eine derart vorbehandelte Folie verwendet wird.

4. Verfahren nach einem der vorangehenden Ansprüche, **dadurch gekennzeichnet, daß** auf der für die Klebstoffbeschichtung bestimmten Seite der Trägerfolie vor der Klebstoffbeschichtung ein Haftvermittler oder eine Mischung von Haftvermittlern aufgetragen wird, oder daß eine derart vorbehandelte Folie verwendet wird.

5. Verfahren nach einem der vorangehenden Ansprüche, **dadurch gekennzeichnet, daß** diejenige Seite der Trägerfolie, die nicht mit Klebstoff beschichtet wird, dehäsiv ausgerüstet ist, vorzugsweise durch Silikonisierung.

6. Verfahren nach einem der vorangehenden Ansprüche, **dadurch gekennzeichnet, daß** der zur Beschichtung der Trägerfolie verwendete Klebstoff aus der Gruppe ausgewählt ist, die Polyacrylatlösungen und -dispersionen, Kautschuklösungen und -dispersionen, Silikonlösungen und -dispersionen sowie Kombinationen der vorgenannten Klebstoffe umfaßt, wobei modifizierte Polyacrylatlösungen und -dispersionen besonders bevorzugt werden.

7. Verfahren nach Anspruch 6, **dadurch gekennzeichnet, daß** als Klebstoff ein Polyacrylat-Haftkleber verwendet wird, vorzugsweise ein Reinacrylat-Haftkleber.

8. Verfahren nach Anspruch 6 oder 7, **dadurch gekennzeichnet, daß** der Klebstoff einen oder mehrere modifizierende Zusätze enthält, welche aus der vernetzende Reagenzien, Klebharze, hydrophile Kieselsäure, Ruß, Füllstoffe, insbesondere keramische Füllstoffe, und Pigmente umfassenden Gruppe ausgewählt sind, wobei unter den Vernetzungsreagenzien Aluminiumacetylacetonat und Titanylacetylacetonat besonders bevorzugt werden.

9. Verfahren nach Anspruch 8, **dadurch gekennzeichnet, daß** die Klebstofflösung oder -dispersion bei 20 °C eine dynamische Viskosität im Bereich von 0,05 bis 5 Pa s, vorzugsweise im Bereich von 0,1 bis 1,5 Pa s, aufweist.

10. Verfahren nach einem der vorangehenden Ansprüche, **dadurch gekennzeichnet, daß** der Klebstoffauftrag mittels Gravurwalzenauftrag erfolgt, insbesondere mittels Rasterwalzenauftrag.

11. Verfahren nach Anspruch 10, **dadurch gekennzeichnet, daß** die Gravurwalze oder Rasterwalze eine Vielzahl von rasterartigen Vertiefungen oder Aussparungen aufweist, die eine vorgegebene geometrische Form und Anordnung und eine vorgegebene Tiefe haben.

12. Verfahren nach Anspruch 11, **dadurch gekennzeichnet, daß** die Gravur- oder Rasterwalze aus einer Gruppe von Gravur- und Rasterwalzen ausgewählt wird, die verschiedenartigste geometrische Formen, Anordnungen und Tiefen der genannten Aussparungen aufweisen, dergestalt, daß durch die Auswahl einer bestimmten Gravur- oder Rasterwalze die Dicke der getrockneten Klebstoffschicht und damit deren Klebkraft verändert und an die Eigenschaften eines gegebenen Werkstücks angepaßt wird.

13. Verfahren nach Anspruch 12, **dadurch gekennzeichnet, daß** die Gravur- oder Rasterwalze ein Schöpfvolumen im Bereich von 10 bis 500 ml/m², vorzugsweise von 50 bis 200 ml/m² aufweist.

14. Verfahren nach einem der Ansprüche 10 bis 13, **dadurch gekennzeichnet, daß** der Druck- oder Rasterwalze gegenüberliegend eine Gegenwalze, vorzugsweise aus Gummi oder mit Gummibeschichtung, angeordnet ist, wobei die Trägerfolie während des Beschichtungsvorgangs zwischen Druck- oder Rasterwalze einerseits und Gegenwalze andererseits vorwärtstransportiert wird, und wobei bevorzugt wird, daß die Bahngeschwindigkeiten der beiden genannten Walzen unterschiedlich sind.

15. Verfahren nach einem der vorangehenden Ansprüche, **dadurch gekennzeichnet, daß** das verwendete Auftragssystem ein Einkammer- oder Zweikammerabstreifsystem oder ein Druckkammerrakel-System umfaßt.

16. Verfahren nach einem der vorangehenden Ansprüche, **dadurch gekennzeichnet, daß** anstelle des Gravurdruckverfahrens ein Hochdruckverfahren, insbesondere Flexodruck, verwendet wird.

17. Verfahren nach einem der vorangehenden Ansprüche, **dadurch gekennzeichnet, daß** der Klebstoff mit einem Flächengewicht von höchstens 15 g/m², insbesondere mit einem Flächengewicht von höchstens 10 g/m², besonders bevorzugt mit einem Flächengewicht von 3 bis 10 g/m², aufgetragen wird.

18. Verfahren nach einem der vorangehenden Ansprüche, **dadurch gekennzeichnet, daß** die Trocknung in zwei oder mehreren aufeinanderfolgenden Temperaturzonen erfolgt mit einem aufsteigenden und absteigenden Temperaturprofil, vorzugsweise bei Temperaturen im Bereich von 30 bis 180 °C, insbesondere im Bereich von 40 bis 140 °C.

19. Haftklebendes Erzeugnis, erhältlich durch ein Verfahren nach einem der Ansprüche 1 bis 18.

20. Haftklebendes Erzeugnis nach Anspruch 19, **dadurch gekennzeichnet, daß** es als Band oder als Rolle oder als Folie mit definierter geometrischer Form vorliegt.

21. Haftklebendes Erzeugnis nach Anspruch 19 oder 20, **dadurch gekennzeichnet, daß** die getrocknete Haftklebeschicht eine Dicke im Bereich von 1 bis 20 µm, vorzugsweise 5 bis 15 µm Dicke aufweist.

22. Haftklebendes Erzeugnis nach einem der Ansprüche 19 bis 21, **dadurch gekennzeichnet, daß** darauf ein Werkstück oder eine Vielzahl von Werkstücken wiederablösbar aufgeklebt ist.

23. Haftklebendes Erzeugnis nach einem der Ansprüche 19 bis 22, **dadurch gekennzeichnet, daß** die Klebkraft im Bereich von 0,1 bis 10 N/25 mm, insbesondere 0,5 bis 5 N/25 mm, liegt, wobei "Klebkraft" den dynamischen Schälwiderstand nach DIN 1939, gemessen auf poliertem Stahl, bedeutet.

24. Haftklebendes Erzeugnis nach einem der Ansprüche 19 bis 22, **dadurch gekennzeichnet, daß** die Haftfestigkeit des klebenden Erzeugnisses, bezogen auf das darauf geklebte Werkstück, im Bereich von 0,05 bis 5 N/25 mm, vorzugsweise 0,1 bis 2 N/25 mm, liegt, jeweils gemessen nach DIN EN 1939.

25. Verwendung einer Prozeß- oder Schutzfolie, hergestellt nach einem Verfahren gemäß einem der Ansprüche 1 bis 18, oder eines klebenden Erzeugnisses nach einem der Ansprüche 19 bis 24, zum vorübergehenden Fixieren oder Bedecken von Werkstücken, sowie wahlweise zum anschließenden oder späteren Transport von Werkstücken, wobei das Werkstück schließlich wieder von dem Folie abgelöst wird.

26. Verwendung nach Anspruch 25, **dadurch gekennzeichnet, daß** eine Vielzahl von identischen oder gleichartigen Werkstücken wiederablösbar auf der genannten Folie befestigt werden, wobei es sich bei den Werkstücken vorzugsweise um dünne, flexible Flächengebilde handelt, insbesondere aus Vlies, textilen Stoffen, Schaumstoff oder Kunststoff-Folien, oder Kombinationen davon.

27. Verwendung nach Anspruch 25 oder 26, **dadurch gekennzeichnet, daß** die genannte Folie zur manuellen, halbautomatischen oder automatischen Applikation von Werkstücken verwendet wird.
